# EUROPÄISCHE PATENTANMELDUNG

(11) **EP 1 868 318 A1**
(43) Veröffentlichungstag der Anmeldung: **19.12.2007**
(21) Anmeldenummer: 06012181.1
(22) Anmeldetag: 13.06.2006
(51) Int. Cl.: H04L 12/24

(54) **Flexible Änderung des Zuständigkeitsbereiches eines Operators für das Netzwerkmanagement**

(71) Anmelder: NOKIA SIEMENS NETWORKS GMBH & CO. KG, 81541 München (DE)
(72) Erfinder: Hirsch, Lucian, 81373 München (DE)

(57) **Zusammenfassung**

Die Erfindung betrifft ein Verfahren zum Betreiben eines zumindest einen Manager (NMS) und einen Agenten (EMS) umfassenden Managementsystems, bei welchem Elemente (NMS, DMS, EMS, BSS, RNC, NodeB) als Objekte eines hierarchischen Objektbaumes dargestellt werden. Der Agent (EMS) empfängt von dem Manager (NMS) Informationen betreffend ein Objekt. Der Agent (EMS) setzt die Informationen betreffend das Objekt bei einer Filterung zur Entscheidung über eine Versendung von Nachrichten von dem Agenten (EMS) an den Manager (NMS) derart ein, dass Nachrichten betreffend das Objekt und Nachrichten betreffend eines oder mehrere dem Objekt im Objektbaum untergeordnete Objekte einen Filter passieren. Weiterhin betrifft die Erfindung einen Manager (NMS) und einen Agenten (EMS) zur Durchführung des Verfahrens.

## Beschreibung

Die Erfindung betrifft ein Verfahren zum Betreiben eines zumindest einen Manager und einen Agent umfassenden Managementsystems, bei welchem Elemente als Objekte eines hierarchischen Objektbaumes dargestellt werden.

Gemäß den Prinzipien eines Managementsystems, auch als TMN-Prinzipien (TMN: Telecommunications Management Network) bezeichnet, existieren mehrere Managementschichten für das Management eines Kommunikationssystems - wie beispielsweise eines Mobilfunkkommunikationssystems -, wobei jede Schicht mit Ausnahme der obersten und untersten Schicht eine doppelte Funktion, nämlich eine Manager- und eine Agentenfunktion besitzt. Im managenden System ("managing system") übt jede Ebene außer der untersten eine Manager-Funktion für die darunterliegende Ebene aus. Im gemanagten System ("managed system") kommt jeder Ebene außer der obersten eine AgentenFunktion für die nächsthöhere Schicht zu.

Manager starten zur Netzüberwachung und -kontrolle Operationen, indem sie sogenannte "requests" versenden, die von Agenten ausgeführt werden, und erhalten entsprechende Rückmeldungen, sogenannte "responses", von den Agenten. Elemente des Telekommunikationsnetzes, auch als Ressourcen des Telekommunikationsnetzes bezeichnet, die in einer TMN-Hierarchie die Rolle eines Agenten ausüben, erkennen relevante Ereignisse, sogenannte "events", wie z.B. Alarme, generieren entsprechende Mitteilungen, sogenannte "notifications", und übertragen sie in Form von Ereignismeldungen, sogenannten "event reports", an Manager, um ein effizientes Netzmanagement zu ermöglichen.

Das Netzwerkmanagement kann unter anderem das Fehlermanagement (Fault-Management) und/oder das Konfigurationsmanagement (Configuration Management) und/oder das Sicherheitsmanagement (Security-Management) und/oder das des Abrechnungsmanagement (Accounting-Management) und/oder das Leistungsmanagement (Performance-Management) umfassen. Durch das Netzwerkmanagement sollen geeignete Mechanismen zur Informationsverteilung und -verwaltung bereitgestellt werden, so dass bei Bedarf ein umfassendes Bild über den Netzzustand zur Verfügung steht und die einzelnen Ressourcen des Telekommunikationsnetzes effizient überwacht und konfiguriert werden können.

Die Manager-Agent-Kommunikation erfolgt über sogenannte Management-Schnittstellen bzw. Manager-Agent-Schnittstellen, die in einer objekt-orientierten Umgebung durch ein Kommunikationsprotokoll, wie z.B. CMIP (Common Management Information Protocol) nach ITU-T X.711 oder CORBA (Common Object Request Broker Architecture), und durch ein Objektmodell gekennzeichnet sind. Objektmodelle dienen der Modellierung von Ressourcen des Telekommunikationsnetzes, wobei diese Ressourcen bei der Modellierung in Objektklassen eingeteilt werden.

Solche Schnittstellen gibt es beispielsweise zwischen einerseits der Netzwerkelementmanagement-Ebene (Network Element Management Level) und andererseits der Netzwerkelement-Ebene (Network Element Level). Ein Beispiel für Netzeinrichtungen dieser Manager-Agent-Schnittstelle stellen die Betriebs- und Wartungszentren (OMC: Operation and Maintenance Center) auf der Seite der Netzwerkelementmanagement-Ebene dar, sowie auf der Seite der Netzwerkelement-Ebene Einrichtungen wie z.B. Basisstationen des Basisstationssystems (BSS: Base Station System) eines GSM Mobilfunknetzes, oder Basisstationen anderer Kommunikationsnetze, beispielsweise NodeB's eines UMTS Mobilfunknetzes (UMTS: Universal Mobile Telecommunication System), oder Funkzugangspunkte eines WLAN-Systems (WLAN: Wireless Local Area Network) beispielsweise gemäß einem der IEEE 802.11-Standards.

Management-Schnittstellen bzw. Manager-Agent-Schnittstellen existieren auch zwischen einerseits der Netzwerkmanagement-Ebene (Network Management Level) und andererseits der Netzwerkelementmanagement-Ebene. Ein Beispiel für Netzeinrichtungen zu dieser Manager-Agent-Schnittstelle stellen die Netzwerkmanagementzentren (NMC: Network Management Center) auf der Seite der Netzwerkmanagement-Ebene und die Betriebs- und Wartungszentren (OMC: Operation and Maintenance Center) auf der Seite der Netzwerkelementmanagement-Ebene z.B. im genannten GSM oder einem anderen Mobilfunk- oder Telekommunikationsnetz dar.

Der Erfindung liegt die Aufgabe zugrunde, effiziente Verfahren zum Betreiben eines Managementsystems und Vorrichtungen zur Durchführung der Verfahren aufzuzeigen.

Diese Aufgabe wird durch ein Verfahren mit den Merkmalen des Anspruchs 1, sowie durch ein Verfahren und Vorrichtungen mit Merkmalen von nebengeordneten Ansprüchen gelöst. Vorteilhafte Ausgestaltungen und Weiterbildungen sind Gegenstand von Unteransprüchen.

Bei dem erfindungsgemäßen Verfahren zum Betreiben eines zumindest einen Manager und einen Agenten umfassenden Managementsystems werden Elemente als Objekte eines hierarchischen Objektbaumes dargestellt. Der Agent empfängt von dem Manager Informationen betreffend ein Objekt. Der Agent setzt die Informationen betreffend das Objekt bei einer Filterung zur Entscheidung über eine Versendung von Nachrichten von dem Agenten an den Manager derart ein, dass Nachrichten betreffend das Objekt und Nachrichten betreffend eines oder mehrere dem Objekt im Objektbaum untergeordnete Objekte einen Filter passieren.

Bei der Filterung durch den Agenten wird entschieden, ob eine Nachricht an den Manager zu senden ist oder nicht. Passieren Nachrichten einen Filter, so werden sie an den Manager gesendet, es sei denn, es existiert ein weiterer Filter bzw. ein weiteres Filterkriterium, welches die Versendung verhindert. Ein weiteres Filterkriterium kann z.B. den Nachrichtentyp betreffen. Existiert kein weiterer Filter außer dem erfindungsgemäß verwendeten, so bedeutet die Feststellung, dass eine Nachricht den Filter passiert, dass diese Nachricht von dem Agenten an den Manager zu senden ist.

Das erfindungsgemäß verwendete Filterkriterium lautet, dass eine Nachricht das Objekt oder ein Objekt aus einer Menge von dem Objekt im Objektbaum untergeordneten Objekten betreffen muss, um den Filter zu passieren. Betrifft die Nachricht weder das Objekt noch ein Objekt aus der Menge von untergeordneten Objekten, so passiert die Nachricht den Filter nicht; eine Versendung von dem Agenten an den Manager unterbleibt in diesem Fall. Ein bestimmtes Objekt ist in dem Objektbaum einem anderen Objekt untergeordnet, wenn im Objektbaum die Verbindung von dem bestimmten Objekt zum höchsten Objekt des Objektbaumes über das andere Objekt verläuft.

Die bei dem Filter der Erfindung verwendete Menge der dem Objekt im Objektbaum untergeordneten Objekte kann z.B. aus allen dem Objekt im Objektbaum untergeordneten Objekten bestehen. In diesem Fall passiert eine Nachricht den Filter, wenn sie das Objekt oder ein beliebiges dem Objekt untergeordnetes Objekt betrifft. Es ist auch möglich, dass diese Menge der dem Objekt im Objektbaum untergeordneten Objekte lediglich aus allen der untergeordneten Objekte besteht, welche einer oder mehreren bestimmten Objektklassen angehören. In diesem Fall passiert eine Nachricht den Filter nicht, wenn sie ein Objekt einer anderen Objektklasse betrifft.

Die Informationen, welche von dem Manager an den Agenten gesendet werden, indizieren ein bestimmtes Objekt und nicht diesem Objekt im Objektbaum untergeordnete Objekte. Dennoch verwendet der Agent zur Filterung nicht nur das Objekt, sondern auch eines oder mehrere dem Objekt im Objektbaum untergeordnete Objekte. Hierdurch werden Übertragungsressourcen für die Übertragung von dem Manager zu dem Agent eingespart. Weiterhin vermindert dies den Aufwand des Managers, denn dieser muss dem Agenten nicht alle einzelnen Objekte mitteilen, welche bei der Filterung berücksichtigt werden sollen.

Der Manager kann dem Agenten Informationen betreffend eine Mehrzahl von Objekten senden, mit welchen der Agent wie in Bezug auf das eine Objekt beschrieben vorgeht. Bei den mehreren Objekten handelt es sich in diesem Fall nicht um Objekte, welche untereinander ein Unterordnungsverhältnis im Objektbaum aufweisen. Die mehreren Objekte können dennoch verschiedenen Hierarchieebenen des Objektbaumes angehören. Die Informationen betreffend die mehreren Objekte können in einer gemeinsamen Nachricht, z.B. in Form einer Liste, gesendet werden, oder in getrennten Nachrichten.

In Weiterbildung der Erfindung betrifft die Filterung Ereignismeldungen, und Ereignismeldungen stammend von dem Objekt und Ereignismeldungen stammend von dem einen oder den mehreren dem Objekt im Objektbaum untergeordneten Objekten passieren den Filter. In diesem Fall betreffen die Nachrichten, welche den Filter passieren, insofern das Objekt und die Objekte der Menge von untergeordneten Objekten, als die Nachrichten von diesen Objekten stammen, d.h. ursprünglich von diesen versendet wurden. Bei den Ereignismeldungen kann es sich z.B. um Alarme handeln, oder um Zustandsänderungen (englisch: state changes), oder um netzkonfigurationsbezogene Ereignismeldungen (englisch: attribute value changes).

In Weiterbildung der Erfindung betrifft die Filterung einen von dem Manager angeforderten Alarmabgleich, und Alarme stammend von dem Objekt und Alarme stammend von dem einen oder den mehreren dem Objekt im Objektbaum untergeordneten Objekten passieren den Filter. Bei einem von dem Manager angeforderten Alarmabgleich teilt der Agent dem Manager Informationen über von ihm gespeicherte Alarme mit. Hierfür kann z.B. die standardisierte Prozedur getAlarmList eingesetzt werden, beschrieben in 3GPP TS 32.111-2: Fault Management; Part 2: Alarm Integration Reference Point (IRP): Information Service (IS).

In Weiterbildung der Erfindung betrifft die Filterung eine Netzkonfigurationsabfrage des Managers, und Konfigurationsdaten des Objektes und Konfigurationsdaten des einen oder der mehreren dem Objekt im Objektbaum untergeordneten Objekte passieren den Filter. In diesem Fall betrifft eine den Filter passierende Nachricht ein Objekt insofern, als sie Konfigurationsdaten von diesem Objekt enthält.

Einer bevorzugten Ausführungsform gemäß setzt der Agent nach Empfang der Informationen betreffend das Objekt einen Wert eines Attributs für das Objekt und für das eine oder die mehreren dem Objekt im Objektbaum untergeordneten Objekte auf eine Größe, welche dem Manager zugeordnet ist. Diese Größe kann dem Agenten von dem Manager mitgeteilt werden, z.B. zusammen mit den Informationen betreffend das Objekt. Die Zuordnung zu dem Manager ist vorzugsweise eine eindeutige; vorzugsweise kann das Attribut zu einem Zeitpunkt lediglich einen Wert aufweisen, so dass ein eindeutige Korrelation zwischen dem Objekt und dem Manager möglich ist. Vorteilhaft ist es, wenn der Agent nach Empfang einer von einem Objekt stammenden Nachricht den Wert des Attributs dieses Objektes und/oder den Wert des Attributes eines dem Objekt im Objektbaum untergeordneten Objektes abfragt. Hierfür kann eine bestimmte Reihenfolge vorgegeben sein, z.B. zuerst das Attribut des Objektes, von welchem die Nachricht stammt, danach das Attribut des direkt übergeordneten Objektes, danach das Attribut des nächst höheren übergeordneten Objektes, usw.

In Ausgestaltung der Erfindung empfängt der Agent von dem Manager eine Anforderung von Nachrichten und eine Aufforderung, die Informationen betreffend das Objekt bei der Filterung dieser Nachrichten derart einzusetzen, dass Nachrichten betreffend das Objekt und Nachrichten betreffend das eine oder die mehreren dem Objekt im Objektbaum untergeordneten Objekte den Filter passieren. Diese Aufforderung und diese Anforderung der Nachrichten sind vorzugsweise in einer gemeinsamen Nachricht enthalten. Dieses Vorgehen kann z.B. auf den standardisierten Subskribe-Mechanismus angewandt werden, beschrieben in 3GPP TS 32.302: Configuration Management (CM); Notification Integration Reference Point (IRP): Information Service (IS).

Vorteilhaft ist es, wenn der Agent von dem Manager zusätzlich zu den Informationen betreffend das Objekt eine Identifikationsinformation eines Operators empfängt, und durch die Informationen betreffend das Objekt ein Zuständigkeitsbereich dieses Operators definiert wird. Der Zuständigkeitsbereich beschreibt den Bereich innerhalb des Objektbaumes, welcher für den Operator interessant ist und aus welchem er Nachrichten zu empfangen wünscht. Eine Versendung von Nachrichten von dem Agenten an den Manager entspricht in diesem Fall einer Versendung an diesen Operator. Der Manager kann von einem oder mehreren Operatoren bedient werden.

Einer Ausgestaltung der Erfindung gemäß teilt der Agent dem Manager auf eine Aufforderung durch den Manager hin die aktuell von dem Agenten zur Filterung verwendeten Informationen betreffend das Objekt mit.

Bei dem zweiten erfindungsgemäßen Verfahren zum Betreiben eines zumindest einen Manager und einen Agenten umfassenden Managementsystems werden Elemente als Objekte eines hierarchischen Objektbaumes dargestellt. Der Manager sendet an den Agenten Informationen betreffend ein Objekt. Diese Informationen sind dafür bestimmt, vom Agenten eingesetzt zu werden bei einer Filterung zur Entscheidung über eine Versendung von Nachrichten von dem Agenten an den Manager derart, dass Nachrichten betreffend das Objekt und Nachrichten betreffend eines oder mehrere dem Objekt im Objektbaum untergeordnete Objekte einen Filter passieren.

Die Erläuterungen hinsichtlich des zuerst beschriebenen erfindungsgemäßen Verfahrens sind entsprechend auf das zweite erfindungsgemäße Verfahren anwendbar.

Der erfindungsgemäße Agent für ein zumindest einen Manager und den Agenten umfassendes Managementsystem, in welchem Elemente als Objekte eines hierarchischen Objektbaumes dargestellt werden, umfasst Mittel zum Empfangen von dem Manager von Informationen betreffend ein Objekt, sowie Mittel zum Einsetzen der Informationen betreffend das Objekt bei einer Filterung zur Entscheidung über eine Versendung von Nachrichten von dem Agenten an den Manager derart, dass Nachrichten betreffend das Objekt und Nachrichten betreffend eines oder mehrere dem Objekt im Objektbaum untergeordnete Objekte einen Filter passieren.

Der erfindungsgemäße Manager für ein zumindest den Manager und einen Agenten umfassendes Managementsystem, in welchem Elemente als Objekte eines hierarchischen Objektbaumes dargestellt werden, umfasst Mittel zum Senden an den Agenten von Informationen betreffend ein Objekt. Diese Informationen sind dafür bestimmt, vom Agenten eingesetzt zu werden bei einer Filterung zur Entscheidung über eine Versendung von Nachrichten von dem Agenten an den Manager derart, dass Nachrichten betreffend das Objekt und Nachrichten betreffend eines oder mehrere dem Objekt im Objektbaum untergeordnete Objekte einen Filter passieren.

Der erfindungsgemäße Manager und der erfindungsgemäße Agent eignen sich insbesondere zur Durchführung der erfindungsgemäßen Verfahren, wobei dies auch auf die Ausgestaltungen und Weiterbildungen zutreffen kann. Hierzu können sie weitere geeignete Mittel umfassen.

Im folgenden wird die Erfindung anhand eines Ausführungsbeispiels näher erläutert. Dabei zeigen:
- Figur 1:: einen Ausschnitt aus einem Managementsystem,
- Figur 2:: einen hierarchischen Objektbaum.

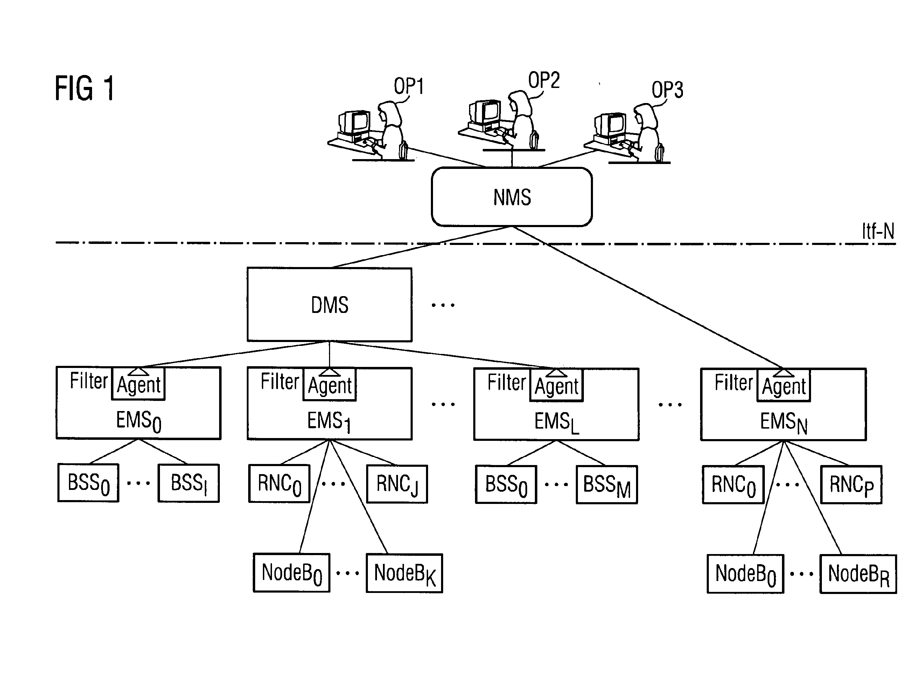

Die Erfindung wird anhand eines Managementsystems eines UMTS-Mobilfunkkommunikationssystems erläutert. Die Erfindung ist jedoch auch auf andere Managementsysteme anwendbar. Der in Figur 1 dargestellte Ausschnitt aus dem betrachteten Managementsystem besteht aus vier Managementebenen. Auf der höchsten Ebene befindet sich der Netzwerkmanager NMS (NMS: Network Management System). Die für die Kommunikation mit dem Netzwerkmanager NMS verwendete Schnittstelle wird als Itf-N Schnittstelle bezeichnet. Durch die bei UMTS standardisierte Itf-N Schnittstelle wird die Integration verschiedener hersteller-spezifischer untergeordneter Manager ermöglicht.

Oftmals wird in Mobilfunknetzen aufgrund der hohen Anzahl von Netzelementen ein Domänenmanager zwischen einem Netzwerkmanager und mehreren Elementmanagern eingesetzt. Ein solcher Domänenmanager DMS (DMS: Domain Manager System) fungiert im System der Figur 1 als Manager gegenüber den Elementmanagern EMS₀, EMS₁, ..., EMS_{L}, sowie als Agent gegenüber dem Netzwerkmanager NMS. Auf der Elementmanager-Ebene befinden sich die Elementmanager EMS₀, EMS₁, ..., EMS_{L}, ..., EMS_{N} (EMS: Element Management System). Die Elementmanager EMS₀, EMS₁, ..., EMS_{L}, ..., EMS_{N} verwalten jeweils üblicherweise vom gleichen Hersteller stammende Netzelemente. Die Elementmanager EMS₀, EMS₁ ..., EMS_{L}, ..., EMS_{N} fungieren als Agenten gegenüber dem Netzwerkmanager NMS bzw. dem Domänenmanager DMS. Sie führen mit ihrem Bestandteil Filter eine Filterung von von Netzelementen gesendeten Ereignismeldungen durch, um hierdurch über eine Weiterleitung dieser Ereignismeldungen an den Netzwerkmanager NMS zu entscheiden.

Auf der Netzelementebene der Figur 1 befinden sich die Netzelemente BSS₀,..., BSS_{I} (BSS: Base Station System), welche von dem Elementmanager EMS₀ verwaltet werden, sowie die Netzelemente RNC₀,..., RNC_{J} (RNC: Radio Network Controller) und NodeB₀,..., NodeB_{K}, welche von dem Elementmanager EMS₁ verwaltet werden, sowie die Netzelemente BSS₀,..., BSS_{M}, welche von dem Elementmanager EMS_{L} verwaltet werden, sowie die Netzelemente RNC₀, ..., RNCₚ und NodeB₀,..., NodeB_{R}, welche von dem Elementmanager EMS_{N} verwaltet werden.

Es wird eine objekt-orientierten Modellierung von Netzressourcen eingesetzt, bei welcher diese Netzressourcen als Instanzen von Objektklassen dargestellt werden. Die 3GPP Standardspezifikation TS 32.622 ("Generic network resources Integration Reference Point (IRP); Network Resource Model (NRM)") definiert hierzu ein generisches Modell, welches die Verwendung standardisierter Objektklassen ermöglicht. Z.B. wird eine als SubNetwork bezeichnete Objektklasse definiert. Diese kann einen Satz von Objekten enthalten, welche für einen Netzwerkmanager über die Itf-N Schnittstelle sichtbar sind. Diese Objekte eines SubNetworks können sowohl Managementeinrichtungen, wie z.B. Elementmanager oder Domänenmanager als Instanzen einer als ManagementNode bezeichneten Objektklasse darstellen, oder auch Netzelemente als Instanzen einer als ManagedElement bezeichneten Objektklasse.

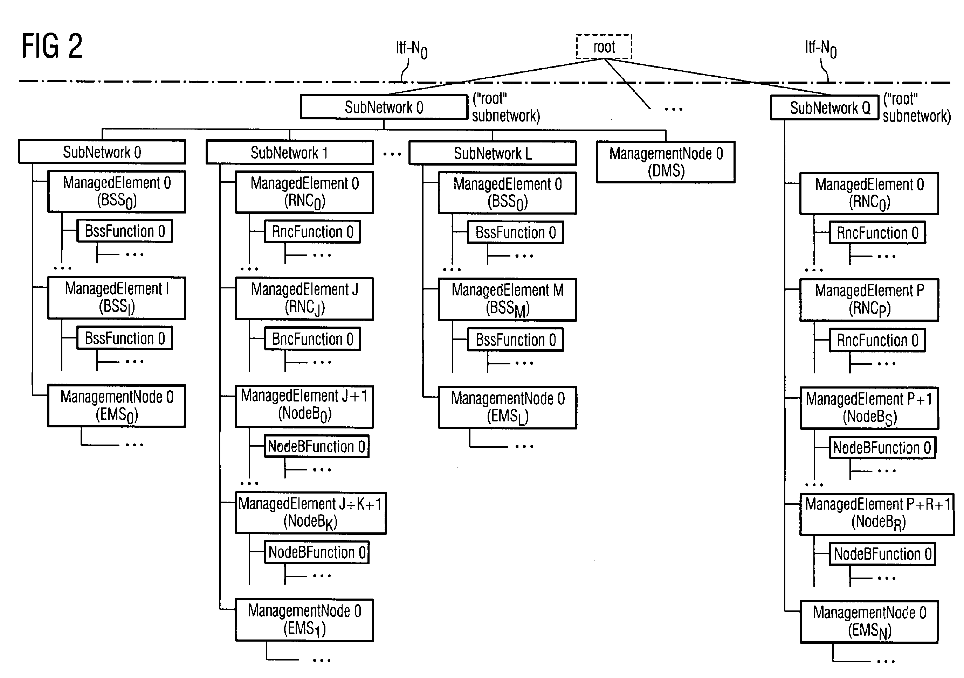

Unter Verwendung der erläuterten Objektklassen SubNetwork, ManagementNode und ManagedElement entspricht dem in Figur 1 dargestellten Managementsystem der in Figur 2 dargestellte Objektbaum. Für den vom Domänenmanager DMS verwalteten Bereich des Systems existiert das root SubNetwork 0, für welches der Domänenmanager DMS als ManagementNode zuständig ist, sowie die weiteren SubNetwork-Instanzen 0, 1,..., L, für welche der jeweilige Elementmanager EMS₀, EMS₁,..., EMS_{L} zuständig ist. Für jedes ManagedElement existiert ein ihm untergeordnetes Objekt, als BssFunction, RncFunction oder NodeBFunction bezeichnet. Diese dienen der detailierteren Beschreibung der Netzelemente BSS, RNC oder NodeB, indem sie spezifische Attribute aufweisen, welche die übergeordnete generische Objektklasse ManagedElement nicht aufweist. Ein Netzelement BSS, RNC oder NodeB stellt sowohl eine Instanz der Objektklasse ManagedElement als auch die jeweils zugehörige -Function Instanz dar. Der Netzwerkmanager NMS, in Figur 2 die Instanz root bildend, ist über eine mit Itf-N₀ bezeichnete Schnittstelle mit dem Domänenmanager DMS des root SubNetwork 0, usw., und über eine mit Itf-N_{Q} bezeichnete Schnittstelle mit dem Elementmanager EMS_{M} des SubNetwork Q verbunden.

Zur Identifizierung von Instanzen des Objektbaums werden für die Kommunikation über die Itf-N Schnittstelle als "Distinguished Names" bezeichnete Größen eingesetzt. Ein Distinguished Name besteht aus mehreren logischen Komponenten, welche die betreffende und die übergeordneten Instanzen im Objektbaum angeben. Beispielsweise lautet der Distinguished Name der mit einem * markierten RNC-Instanz der Figur 2: SubNetwork:0 / SubNetwork:1 / ManagedElement:J / RncFunction:0.

Weiterhin können Objekte von einem NMS-Operator mit einem netzweit eindeutigen symbolischen Namen gekennzeichnet werden. Dies ermöglicht eine anwenderfreundliche Benutzeroberfläche. Ein Operator kann für von ihm ausgegebene Kommandos symbolische Namen einsetzen, welche vom Netzwerkmanager NMS in die entsprechenden Distinguished Names umgesetzt werden, bevor eine Versendung über die Itf-N Schnittstelle erfolgt.

Es existieren drei Operatoren OP1, OP2 und OP3, welche für die Überwachung des in Figur 1 dargestellten Ausschnitts des Managementsystems verantwortlich sind. Hierbei ist in Figur 1 der Fall dargestellt, dass die Operatoren OP1, OP2 und OP3 den gleichen Netzwerkmanager NMS bedienen. Zur Unterscheidung der Operatoren OP1, OP2 und OP3 können verschiedene Operator-Kennungen eingesetzt werden. Alternativ können jedoch auch mehrere Netzwerkmanager existieren, welche jeweils von lediglich einem Operator bedient werden.

Angesichts der zahlreichen zu überwachenden Netzelemente und der hierdurch hervorgerufenen Vielzahl von Ereignismeldungen sind die Operatoren OP1, OP2 und OP3 jeweils nur für einen Teil des gesamten Netzes zuständig. Ist der Operator OP1 beispielsweise für das root SubNetwork 0 der Figur 2 zuständig, nicht aber für das root SubNetwork Q, so wäre ein von dem Netzelement BSS₁ mit dem Distinguished Name SubNetwork:0 / SubNetwork:0 / ManagedElement:I / BssFuncion:0 erzeugter Alarm für den Operator OP1 interessant, während ein von dem Netzelement NodeB₀ mit dem Distinguished Name SubNetwork:Q / ManagedElement:P+1 / NodeBFunction:0 erzeugter Alarm für den Operator OP1 nicht relevant wäre.

Es ist vorteilhaft, wenn die Zuständigkeitsbereiche der Operatoren OP1, OP2 und OP3 flexibel verändert werden können. Dies bietet sich z.B. in einer Netzupgrade-Phase an, oder wenn kritische Instandsetzungsmaßnahmen durchzuführen sind. In diesen Fällen ist es möglich, dass ein Operator OP1, OP2 oder OP3 seine Aufmerksamkeit zeitweise auf einen stark eingegrenzten Bereich fokussieren möchte, so dass ein anderer Operator OP1, OP2 oder OP3 die Überwachung der anderen Bereiche übernehmen sollte.

Zur Veränderung eines Zuständigkeitsbereiches eines Operators OP1, OP2 oder OP3 wird eine im folgenden mit setManagementDomain bezeichnete Operation eingesetzt. Diese weist die folgenden Parameter auf:
- managerReference: hierbei handelt es sich um eine eindeutige Kennung des jeweiligen Operators OP1, OP2 oder OP3.
- baseObjectList: dieser Parameter gibt in Form einer Liste den vom jeweiligen Operator OP1, OP2 oder OP3 durch die Operation setManagementDomain ausgewählten Zuständigkeitsbereich an. Die Liste enthält die Distinguished Names einer oder mehrerer Objektinstanzen, welche jeweils einen Eingangspunkt für den vom Operator OP1, OP2 oder OP3 ausgewählten Teil des Objektbaums darstellen. D.h. alle im Objektbaum unter einer solchen Instanz stehenden Objekte sind Bestandteil des Zuständigkeitsbereiches des jeweiligen Operators OP1, OP2 oder OP3. Die Bestandteile der Liste können SubNetwork-Instanzen und/oder ManagedElement-Instanzen sein. Enthält die baseObjectList eines Operators beispielsweise die Instanzen SubNetwork:0 / SubNetwork:0 und SubNetwork:0 / SubNetwork:L / ManagedElement:0, so besteht der Zuständigkeitsbereich dieses Operators aus allen vom Elementmanager EMS₀ überwachten Netzressourcen und aus der vom Elementmanager EMS_{L} überwachten Netzressourcen.

Die der Operation setManagementDomain entsprechende Anforderung (englisch: request) eines Operators OP1, OP2 oder OP3 enthält die erläuterten Parameter managerReference und baseObjectList. Ein Operator OP1, OP2 oder OP3 sendet diese Anforderung an alle mit dem Netzwerkmanager NMS über die Itf-N Schnittstelle direkt verbundenen Managementeinrichtungen, oder zumindest an alle von der Veränderung des Zuständigkeitsbereichs betroffenen Managementeinrichtungen. Bestand beispielsweise vor der Veränderung der Zuständigkeitsbereich des Operators OP1 aus der von dem Elementmanager EMS₁ überwachten Netzregion, und besteht sie aufgrund der Veränderung aus den von den Elementmanagern EMS₀ und EMS_{L} überwachten Netzregionen, so genügt es, wenn der Operator OP1 die Anforderung der Operation setManagementDomain an den Domänenmanager DMS sendet. Der Domänenmanager DMS leitet die Anforderung der Operation setManagementDomain dann an die Elementmanager EMS₁, EMS₀ und EMS_{L} weiter.

Zur Umsetzung der Operation setManagementDomain werden die standardisierten Objektklassen SubNetwork, ManagementNode und ManagedElement um ein als relatedNetManager bezeichnetes Attribut erweitert. Dieses Attribut zeigt für eine Instanz dieser Objektklassen an, ob diese Instanz zum Zuständigkeitsbereich eines Operators gehört. Als Reaktion auf den Empfang der Anforderung der Operation setManagementDomain führt ein Elementmanager die Operation setManagementDomain in Bezug auf den von ihm überwachen Bereich des Netzes folgendermaßen aus:
- Für eine in der baseObjectList enthaltene SubNetwork-Instanz wird das Attribut relatedNetManager dieser SubNetwork-Instanz auf den Wert managerReference des jeweiligen Operators gesetzt. Weiterhin wird das Attribut relatedNetManager für alle in dem SubNetwork enthaltenen Instanzen der Objektklassen ManagedElement und ManagementNode auf den Wert managerReference des jeweiligen Operators gesetzt.
- Für eine in der baseObjectList enthaltene ManagedElement-Instanz wird das Attribut relatedNetManager dieser Instanz auf den Wert managerReference des jeweiligen Operators gesetzt.
- Für die Objekte, welche den ManagedElement oder ManagementNode Objektinstanzen untergeordnet sind, erfolgt keine Aktion.
Das Eintragen des Wertes des jeweiligen Attributes relatedNetManager erfolgt in einem Speicher des Elementmanagers. Da der Wert des Attributes wie im folgenden erläutert lediglich für den Elementmanager für eine von ihm durchzuführende Filterung relevant ist, ist das Informieren anderer Einrichtungen über den aktuellen Wert des Attributes nicht nötig.

Ändert sich der Zuständigkeitsbereich eines Operators derart, dass er eingeschränkt wird, werden die Attribute der Instanzen, für welche er nunmehr nicht mehr zuständig ist, von dem zuständigen Elementmanager mit einem anderen, gegebenenfalls einem Default-Wert, belegt, welcher die Zuständigkeit eines anderen Operators anzeigt. Bei einer anschließenden auf diesen Bereich bezogenen Anforderung einer Operation setManagementDomain durch den gleichen oder einen anderen Operator wird dieser Wert dann durch den entsprechenden neuen Wert managerReference ersetzt.

Nach Durchführung der Operation setManagementDomain soll der jeweilige Operator lediglich Ereignismeldungen von Instanzen empfangen, welche zu seinem Zuständigkeitsbereich gehören. Hierzu kann entweder vor oder nach Versendung der Anforderung der Operation setManagementDomain eine weitere Anforderung durch den Operator versendet werden, welche die Weiterleitung ausschließlich von Ereignismeldungen anfordert, welche dem Filterkriterium genügen, dass sie von einer Instanz des Zuständigkeitsbereiches des Operators stammen. Dies kann im Rahmen eines Subskribe-Mechanismus erfolgen. Alternativ kann die Anforderung der Operation setManagementDomain bedeuten, dass der Elementmanager ohne explizite Aufforderung hierzu bei jeder Ereignismeldung vor der Weiterleitung an den Operator zu prüfen hat, ob die Ereignismeldung aus dem Zuständigkeitsbereich des Operators stammt und nur bejahendenfalls eine Weiterleitung durchzuführen hat.

Im folgenden wird davon ausgegangen, dass ein Elementmanager in Bezug auf den von ihm überwachten Netzbereich das Attribut relatedNetManager gemäß den Vorgaben des Parameters baseObjectList gesetzt hat und ihm bekannt ist, dass er eine Filterung von weiterzuleitenden Ereignismeldungen entsprechend dem neu gesetzten Zuständigkeitsbereich durchzuführen hat. Empfängt dieser Elementmanager eine Ereignismeldung, so prüft er zuerst, ob das Attribut relatedNetManager der Instanz, von welcher die Ereignismeldung stammt, existiert. Falls dies zutrifft, prüft er in seinem Bestandteil Filter unter Verwendung des Distinguished Names, ob das Attribut relatedNetManager der Instanz, von welcher die Ereignismeldung stammt, den Wert managerReference eines bestimmten Operators aufweist. Trifft dies zu, wird die Ereignismeldung an den dem Parameter managerReference entsprechenden Operator weitergeleitet. Trifft dies hingegen nicht zu, wird für die nächsthöhere Instanz, welche dem Distinguished Name zu entnehmen ist, geprüft, ob das Attribut relatedNetManager dieser Instanz existiert und den Wert managerReference eines bestimmten Operators aufweist. Trifft dies zu, wird die Ereignismeldung an den dem Parameter managerReference entsprechenden Operator weitergeleitet. Trifft dies nicht zu, wird die nächsthöhere Instanz geprüft, usw. Zumindest für einen Bestandteil des Distinguished Names einer Instanz muss das Attribut relatedNetManager also auf den Wert managerReference eines bestimmten Operators gesetzt sein, um eine Weiterleitung einer von der jeweiligen Instanz stammenden Ereignismeldung an diesen Operator zu bewirken.

Ist beispielsweise der Operator OP1 für den gesamten vom Elementmanager EMS₀ überwachten Netzbereich, d.h. das SubNetwork 0 unter dem SubNetwork 0 zuständig, so wird das Attribut relatedNetManager der SubNetwork-Instanz mit dem Distinguished Name SubNetwork:0 / SubNetwork:0 auf den Wert der managerReference des Operators OP1 gesetzt, ebenso für alle Instanzen ManagedElement und die Instanz ManagementNode dieses SubNetworks. Wird dann eine Ereignismeldung von der Instanz mit dem Distinguished Name SubNetwork:0 / SubNetwork:0 / ManagedElement:I / BssFunction:0 erzeugt und gesendet, so erkennt der Elementmanager EMS₀ anhand des Distinguished Names dieser BSS-Instanz, dass für die nächst höhere Instanz ManagedElemnent:I das Attribut relatedNetManager den Parameter managerReference des Operators OP1 aufweist und die Ereignismeldung daher an den Operator OP1 weiterzuleiten ist.

Alternativ zur Verwendung des Attributs relatedNetManager kann ein Elementmanager bei der Filterung anhand der Positionierung innerhalb des Objektbaumes derjenigen Instanz, von welcher eine Ereignismeldung stammt, feststellen, ob diese Instanz zu dem Zuständigkeitsbereich eines Operators gehört. Dies trifft zu, falls die Instanz untergeordnet zu einer durch die baseObjectList angegebenen Instanz steht. Enthält die baseObjectList des Operators OP1 beispielsweise die Instanz mit dem Distinguished Name SubNetwork:0 / SubNetwork:1, so ist anhand des Objektbaums der Figur 2 ersichtlich, dass Ereignismeldungen z.B. von der Instanz SubNetwork:0 / SubNetwork:1 / ManagedElement:J+1 / NodeBFunction:0 an den Operator OP1 weiterzuleiten sind.

Vorteilhaft ist auch die Verwendung einer Default-baseObjectList. Der Inhalt dieser Liste ist sowohl dem jeweiligen Operator als auch den Elementmanagern bekannt. Die Default-baseObjectList gibt den Zuständigkeitsbereich für den "Normalbetrieb" an. Auf diese Weise kann eine Operation setDefaultManagementDomain zum Einsatz kommen, welche als Parameter lediglich die Größe managerReference enthält. Bei einer Anforderung der Operation setDefaultManagementDomain muss der Netzwerkanager daher keine baseObjectList versenden. Denn die Elementmanager kennen den Inhalt der Default-baseObjectList zumindest insofern der von ihnen überwachte Bereich betroffen ist, und können dementsprechend bei der Filterung vorgehen.

Neben der Operation setManagementDomain wird auch die Operation getManagementDomain eingesetzt. Diese enthält als Parameter die oben erläuterte Größe managerReference. Sie dient der Information des Operators darüber, welcher Zuständigkeitsbereich aktuell ihm zugeordnet ist. Als Antwort auf eine Anforderung der Operation getManagementDomain erhält der Operator von einem Elementmanager den Inhalt der aktuell verwendeten baseObjectList, zumindest insofern der vom jeweiligen Elementmanager überwachte Bereich betroffen ist.

Von Vorteil bei dem beschriebenen Vorgehen ist, dass ein Operator den genauen Aufbau des Objektbaumes nicht kennen muss. Wollte ein Operator auf herkömmliche Weise Alarme des SubNetwork Q subskribieren, müsste er dem Elementmanager EMS_{N} alle Objektinstanzen mitteilen, welche in dem SubNetwork Q enthalten sind, und von welchen er somit Alarme zu erhalten wünscht. Bei einer Vielzahl von Netzelementen ist dies aufwendig, außerdem setzt es die exakte Kenntnis des Aufbaus des Objektbaumes voraus. Gemäß dem beschriebenen Vorgehen hingegen reicht die Angabe des SubNetwork Q, gegebenenfalls anhand eines dem Operator bekannten symbolischen Namens, ohne Nennung der in dem SubNetwork Q enthaltenen Instanzen.

Die beschriebene Festlegung von Zuständigkeitsbereichen ist vorteilhaft z.B. bei der Abfrage der Netzkonfiguration durch den Netzwerkmanager. Hierfür kann die standardisierte Operation getMoAttributes eingesetzt werden. Ein Operator kann dieser Operation zusätzlich die Bedingung hinzufügen, dass die Antwort sich nur auf Objektinstanzen seines aktuellen Zuständigkeitsbereiches beziehen soll. Der Elementmanager führt daraufhin wie bereits in Bezug auf die Weiterleitung von Ereignismeldungen beschrieben eine Filterung der Konfigurationsdaten durch und sendet dem Operator lediglich Konfigurationsdaten für den aktuellen Zuständigkeitsbereich des Operators.

Möchte ein Operator eine Synchronisierung von Alarmen zwischen ihm und einem Elementmanager durchführen, kann hierfür die standardisierte Operation getAlarmList eingesetzt werden. Auch in diesem Fall kann der Anforderung der Operation zusätzlich die Bedingung hinzugefügt werden, dass die zu synchronisierenden Alarme nur von Objektinstanzen seines aktuellen Zuständigkeitsbereiches stammen sollen. Hierdurch kann eine rasche Aktualisierung der Alarmliste eines Operators nach einer Änderung seines Zuständigkeitsbereiches sichergestellt werden.

Auch in Bezug auf die Zuständigkeit bei der Behandlung von Alarmen erweist sich das beschriebene Vorgehen als vorteilhaft. Denn jeder Operator empfängt Alarme lediglich aus seinem eigenen Zuständigkeitsbereich. Dementsprechend erfolgt auf den Empfang eines Alarms hin eine Bestätigung von Alarmen oder eine manuelle Deaktivierung von Alarmen lediglich in Bezug auf Alarme des eigenen Zuständigkeitsbereiches. Hierdurch können Konflikte zwischen verschiedenen Operatoren bei der Alarmbehandlung vermieden werden.

Bislang wurde beschrieben, dass die Filterung und somit die Entscheidung über eine Weiterleitung an einen Operator, und falls verwendet auch das Setzen des Attributs relatedNetManager, durch die Elementmanager erfolgt. Alternativ hierzu kann dies- sofern vorhanden- von einem Domänenmanager übernommen werden.

## Patentansprüche

1. Verfahren zum Betreiben eines zumindest einen Manager (NMS) und einen Agenten (EMS) umfassenden Managementsystems,
bei welchem Elemente (NMS, DMS, EMS, BSS, RNC, NodeB) als Objekte eines hierarchischen Objektbaumes dargestellt werden,
der Agent (EMS) von dem Manager (NMS) Informationen betreffend ein Objekt empfängt,
der Agent (EMS) die Informationen betreffend das Objekt bei einer Filterung zur Entscheidung über eine Versendung von Nachrichten von dem Agenten (EMS) an den Manager (NMS) derart einsetzt, dass Nachrichten betreffend das Objekt und Nachrichten betreffend eines oder mehrere dem Objekt im Objektbaum untergeordnete Objekte einen Filter passieren.

2. Verfahren nach Anspruch 1, bei dem
der Agent (EMS) die Informationen betreffend das Objekt bei der Filterung derart einsetzt, dass Nachrichten betreffend das Objekt und Nachrichten betreffend alle dem Objekt im Objektbaum untergeordneten Objekte den Filter passieren.

3. Verfahren nach Anspruch 1, bei dem
der Agent (EMS) die Informationen betreffend das Objekt bei der Filterung derart einsetzt, dass Nachrichten betreffend das Objekt und Nachrichten betreffend alle dem Objekt im Objektbaum untergeordneten Objekte einer oder mehrerer bestimmter Objektklassen den Filter passieren.

4. Verfahren nach einem der Ansprüche 1 bis 3, bei dem die Filterung Ereignismeldungen betrifft, und Ereignismeldungen stammend von dem Objekt und Ereignismeldungen stammend von dem einen oder den mehreren dem Objekt im Objektbaum untergeordneten Objekten den Filter passieren.

5. Verfahren nach einem der Ansprüche 1 bis 4, bei dem
die Filterung einen von dem Manager (NMS) angeforderten Alarmabgleich betrifft, und Alarme stammend von dem Objekt und Alarme stammend von dem einen oder den mehreren dem Objekt im Objektbaum untergeordneten Objekten den Filter passieren.

6. Verfahren nach einem der Ansprüche 1 bis 4, bei dem die Filterung eine Netzkonfigurationsabfrage des Managers (NMS) betrifft, und Konfigurationsdaten des Objektes und Konfigurationsdaten des einen oder der mehreren dem Objekt im Objektbaum untergeordneten Objekte den Filter passieren.

7. Verfahren nach einem der Ansprüche 1 bis 6, bei dem der Agent (EMS) nach Empfang der Informationen betreffend das Objekt einen Wert eines Attributs für das Objekt und für das eine oder die mehreren dem Objekt im Objektbaum untergeordneten Objekte auf eine dem Manager (NMS) zugeordnete Größe setzt.

8. Verfahren nach Anspruch 7, bei dem
der Agent (EMS) nach Empfang einer von einem Objekt stammenden Nachricht den Wert des Attributs dieses Objektes und/oder den Wert des Attributs eines dem Objekt im Objektbaum übergeordneten Objektes abfragt.

9. Verfahren nach einem der Ansprüche 1 bis 8, bei dem der Agent (EMS) von dem Manager (NMS) eine Anforderung von Nachrichten empfängt und eine Aufforderung, die Informationen betreffend das Objekt bei der Filterung dieser Nachrichten derart einzusetzen, dass Nachrichten betreffend das Objekt und Nachrichten betreffend das eine oder die mehreren dem Objekt im Objektbaum untergeordneten Objekte den Filter passieren.

10. Verfahren nach einem der Ansprüche 1 bis 9, bei dem der Agent (EMS) von dem Manager (NMS) zusätzlich zu den Informationen betreffend das Objekt eine Identifikationsinformation eines Operators empfängt, und durch die Informationen betreffend das Objekt ein Zuständigkeitsbereich dieses Operators definiert wird.

11. Verfahren nach einem der Ansprüche 1 bis 10, bei dem der Agent (EMS) dem Manager (NMS) auf eine Aufforderung durch den Manager (NMS) hin die aktuell von dem Agenten (EMS) zur Filterung verwendeten Informationen betreffend das Objekt mitteilt.

12. Verfahren zum Betreiben eines zumindest einen Manager (NMS) und einen Agenten (EMS) umfassenden Managementsystems,
bei welchem Elemente (NMS, DMS, EMS, BSS, RNC, NodeB) als Objekte eines hierarchischen Objektbaumes dargestellt werden,
der Manager (NMS) an den Agenten (EMS) Informationen betreffend ein Objekt sendet,
wobei die Informationen betreffend das Objekt bei einer Filterung zur Entscheidung über eine Versendung von Nachrichten von dem Agenten (EMS) an den Manager (NMS) derart einzusetzen sind, dass Nachrichten betreffend das Objekt und Nachrichten betreffend eines oder mehrere dem Objekt im Objektbaum untergeordnete Objekte einen Filter passieren.

13. Agent (EMS) für ein zumindest einen Manager (NMS) und den Agenten (EMS) umfassendes Managementsystem, in welchem Elemente (NMS, DMS, EMS, BSS, RNC, NodeB) als Objekte eines hierarchischen Objektbaumes dargestellt werden, mit Mitteln zum Empfangen von von dem Manager (NMS) gesendeten Informationen betreffend ein Objekt,
Mitteln zum Einsetzen der Informationen betreffend das Objekt bei einer Filterung zur Entscheidung über eine Versendung von Nachrichten von dem Agenten (EMS) an den Manager (NMS) derart, dass Nachrichten betreffend das Objekt und Nachrichten betreffend eines oder mehrere dem Objekt im Objektbaum untergeordnete Objekte einen Filter passieren.

14. Manager (NMS) für ein zumindest den Manager (NMS) und einen Agenten (EMS) umfassendes Managementsystem, in welchem Elemente (NMS, DMS, EMS, BSS, RNC, NodeB) als Objekte eines hierarchischen Objektbaumes dargestellt werden, mit
Mitteln zum Senden von Informationen betreffend ein Objekt an den Agenten (EMS),
wobei die Informationen betreffend das Objekt bei einer Filterung zur Entscheidung über eine Versendung von Nachrichten von dem Agenten (EMS) an den Manager (NMS) derart einzusetzen sind, dass Nachrichten betreffend das Objekt und Nachrichten betreffend eines oder mehrere dem Objekt im Objektbaum untergeordnete Objekte einen Filter passieren.
